# EUROPEAN PATENT SPECIFICATION

(11) **EP 3 163 210 B1**
(45) Date of publication and mention of the grant of the patent: **26.06.2019**
(21) Application number: 15425091.4
(22) Date of filing: 29.10.2015
(51) Int. Cl.: F24H 8/00, F24H 9/02, F24H 9/20, F24C 13/00, F24C 15/10

(54) **IMPROVED HEATING APPLIANCE FOR DOMESTIC INSTALLATIONS**
VERBESSERTE HEIZVORRICHTUNG FÜR HAUSANLAGEN
APPAREIL DE CHAUFFAGE AMÉLIORÉ POUR INSTALLATIONS DOMESTIQUES

(43) Date of publication of application: 03.05.2017
(73) Proprietor: UNICAL AG S.p.A., 46033 Castel d'Ario (MN) (IT)
(72) Inventor: Zilioli, Igor, 20144 Milano (IT)
(74) Representative: Botti, Mario

(56) References cited:
- WO-A2-2009/127935
- BE-A- 554 030
- GB-A- 2 386 413
- US-A- 3 532 857

## Description

### Field of application

The present invention relates to a water heating appliance suitable for installation in a domestic environment and, in particular, in the kitchen of a home, even though the appliance may be effectively used in any other domestic environment.

More particularly, but not exclusively, the invention relates to a water heating appliance provided with at least one connector for connection to the gas supply mains, and the description which follows will be provided with reference to this application area in order to simplify illustration thereof.

### Prior art

In this specific technical sector it is known that, in a domestic context, water heating appliances intended to heat civil and industrial environments such as homes and/or offices are installed in a closed hydraulic circuit.

In many cases, these appliances, which are generically called boilers, are installed in special boiler rooms which are duly ventilated and which normally have, wall-mounted, both the outlet terminals of the gas supply mains and the delivery and return supply connections for the hydraulic heating circuit. The boilers have respective connectors for connection both to the aforementioned gas mains outlet terminals and to the aforementioned supply connections of the hydraulic circuit.

This boiler arrangement may be defined as being traditional both for a single-family or two-family home and for apartment blocks where the heating is centralized and the so-called boiler room is normally situated in a basement.

In apartment blocks with a lot of apartments, however, it is becoming increasingly common to install independent heating systems which are often realized by means of wall heaters which may be wall-mounted in the kitchen area or on an external wall accessible via a balcony.

Although advantageous in certain respects and substantially suited for the purpose, these heating appliances are not particularly pleasing aesthetically speaking, to the point that they are normally covered by a wall furniture unit which has an access door and is more or less integrated with the other components in the kitchen area.

The wall heaters are mounted in the top part of the kitchen area, substantially aligned with the wall-mounted units and this certainly does not facilitate access to the boiler controls.

Moreover, wall heaters require the presence of the wall connections for the gas mains and the hydraulic circuit which are situated at a predefined height on the wall and this results in the need for special building work which must be carried out before installation.

The object of the present invention is to provide a new type of heating appliance which may be better integrated with the other appliances and with the other electric household appliances present in a domestic kitchen.

Another object of the invention is to improve the accessibility to the controls of a boiler which is installed in the kitchen area of a home.

A further object of the invention is to rationalize the boiler connections both to the gas supply mains and to the hydraulic heating circuit.

Last but not least, an object of the invention is to provide a boiler with a compact structure which may be better integrated with the furniture which is normally present in a kitchen area of a civil dwelling.

A water heating appliance according to the preamble of claim 1 is disclosed in GB 2 386 413.

Basically, the technical problem forming the basis of the present invention is that of devising a heating appliance which has structural and functional characteristics such as to allow easier and more practical installation thereof in a kitchen area.

### Summary of the invention

The proposed solution forming the basis of the present invention is that of incorporating in a single appliance both the domestic heating boiler and the cooking hob of the kitchen.

On the basis of this proposed solution, the technical problem is solved by a water heating appliance for domestic installations, provided with at least one connector for connection to a gas supply mains outlet and with further connectors for connection to delivery and return connections of a hydraulic circuit of the heating plant, wherein said water heating appliance consists of a boiler structured as a base-mounted built-in kitchen appliance and comprises a cooking hob on top, said cooking hob forming part of a built-in structure of the water heating appliance. According to the invention, the cooking hob can be raised at an angle, being hinged with a rear edge of said structure, in order to allow the installation and maintenance of the boiler.

Advantageously, the cooking hob may be a cooking hob with gas rings. In this case, the appliance comprises a single connector for connection to the gas supply mains, which is also used for rings of the cooking hob.

Essentially, the invention allows connection to the outlet terminal of the gas supply mains which is normally already present in the wall of the kitchen area and this outlet is used both for gas supply to the boiler and for the gas supply to the cooking hob.

Alternatively, the cooking hob may be a cooking hob with electromagnetic induction hotplates.

The aforementioned cooking hob comprises knobs for regulating said rings or hotplates, which are arranged at the top along one edge of the appliance, for example the front edge, but a side edge could also be suitable for this purpose.

The operating controls and indicators of the boiler are preferably, but not exclusively, arranged on a front panel of said built-in appliance.

These operating controls and indicators of the boiler are visibly arranged in a front finishing panel of said built-in appliance.

Alternatively, the operating controls and indicators of the boiler may be arranged on top of said cooking hob.

Essentially, the appliance according to the invention has dimensions and volumes which are standardized to match those of a built-in modular kitchen unit.

Advantageously, it is possible to provide inside the appliance a water storage tank which is housed inside the built-in structure.

The characteristic features and advantages of the heating appliance according to the invention will emerge from the description, provided hereinbelow, of a non-limiting example of embodiment with reference to the accompanying drawings.

### Brief description of the drawings

- Figure 1 shows a perspective and schematic view of the heating appliance realized according to the present invention;

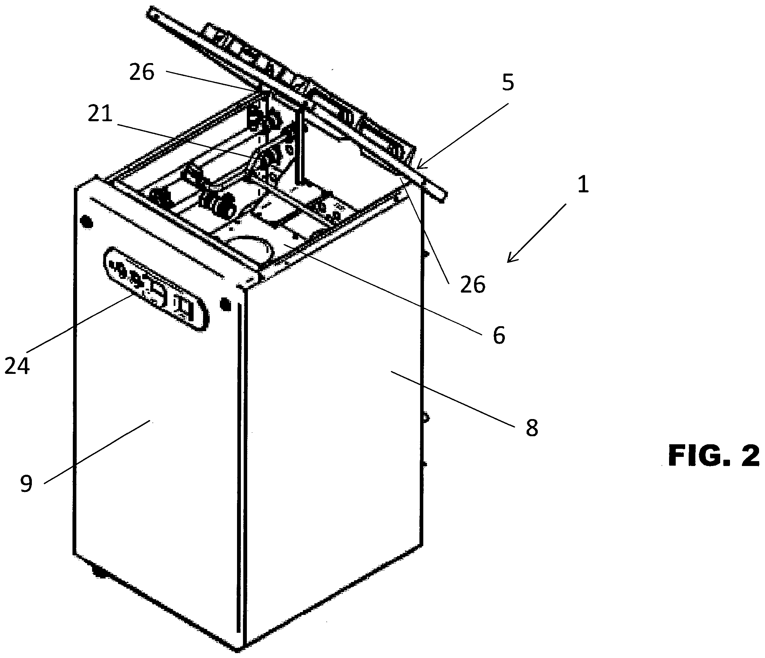

- Figure 2 shows a perspective and schematic view of the heating appliance according to Figure 1 in a configuration for access to the boiler portion;

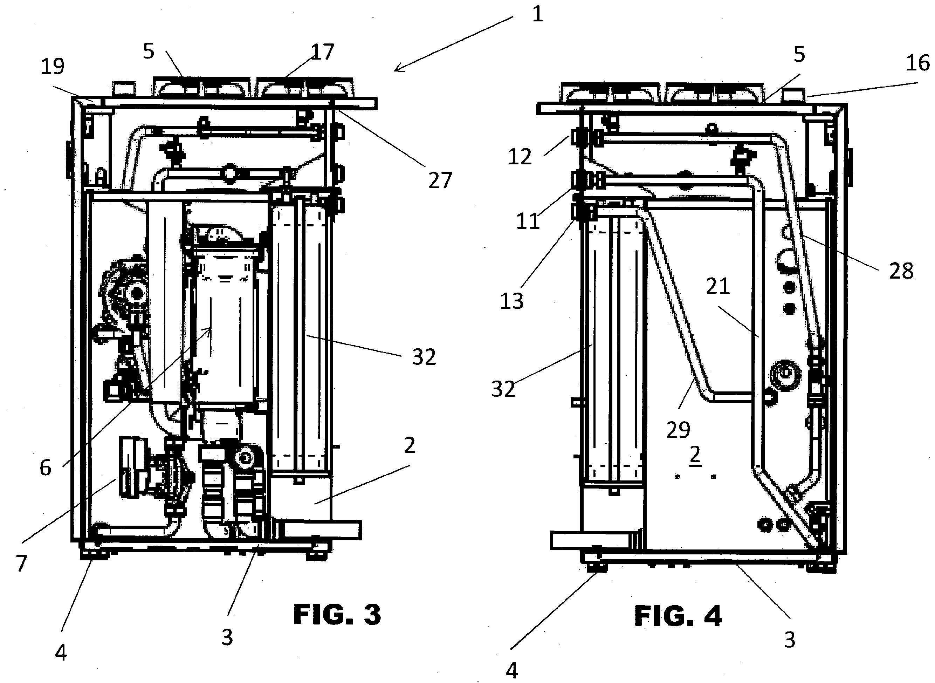

- Figures 3 and 4 shows respective side views of opposite sides of the appliance according to Figure 1, without side covering and finishing panels;
- Figure 5 shows a front, schematic, perspective view of a variation of embodiment of the appliance according to the invention incorporating a water heater;
- Figure 6 shows a rear, schematic, perspective view of the variant of the appliance shown in Figure 5 according to the invention;

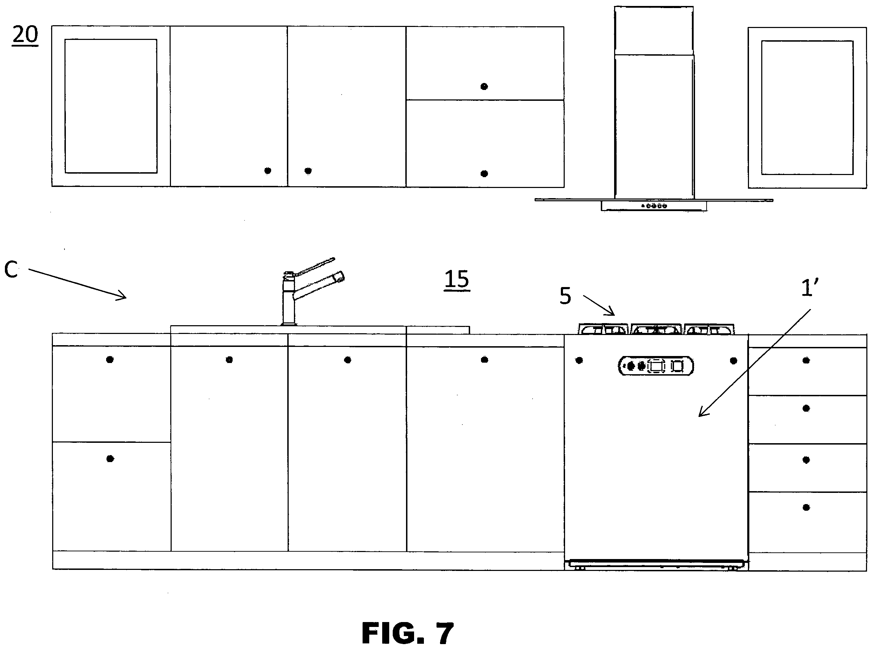

- Figure 7 shows a front schematic view of a modular kitchen with built-in wall units and furniture units, incorporating a heating appliance according to the present invention.

### Detailed description

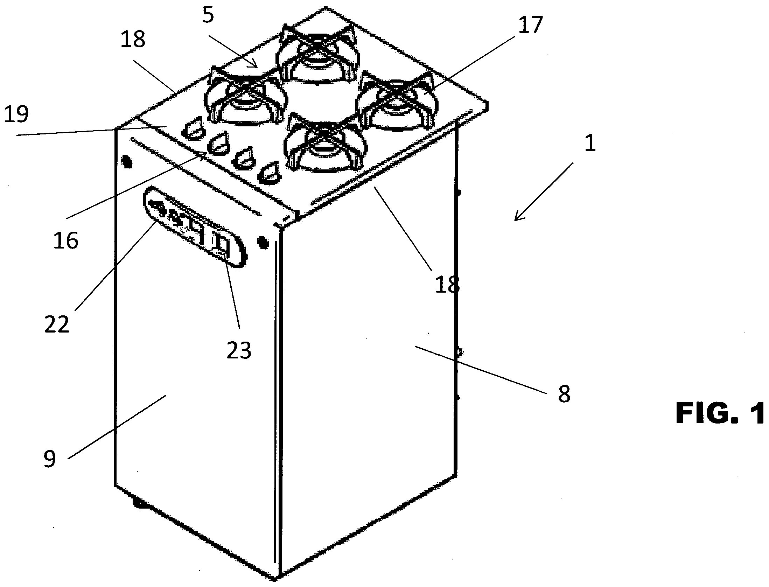

With reference to these figures, and in particular to the example shown in Figure 1, 1 denotes overall and in schematic form an improved water heating appliance according to the present invention for domestic use.

The appliance 1 has a load-bearing frame or structure 2 which extends from a base 3 provided with adjusting feet 4.

Advantageously, according to the invention, the heating appliance 1 is a boiler 6 structured as a base-mounted built-in kitchen appliance and comprising a cooking hob 5 on top. In particular, the appliance 1 has dimensions and volumes which are standardized so that it can be inserted in a built-in modular manner inside a kitchen array C with modular composition for a kitchen area 20.

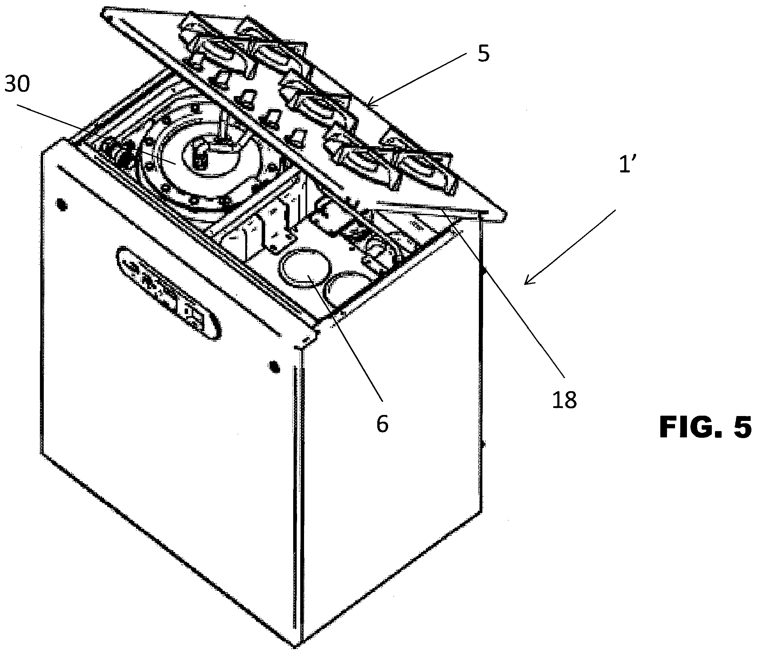

In a first embodiment, the appliance 1 has a standardized width of 450 mm, while in a second embodiment shown in Figure 5 the appliance 1 has a standardized width of 600 mm.

The boiler 6 is preferably a condensation boiler and is complete with all the accessory components such that it may be considered to be a high-efficiency heating unit.

The boiler 6 operates using gas and is complete with all the safety and control components envisaged by the existing standards and also complies, in terms of its technical and functional characteristics, with the legal provisions regarding safety and the use of gas fuel.

The boiler 6 comprises: a burner, a combustion chamber, a heat exchanger, a safety thermostat, a fan and a sealed chamber. These components listed here may be regarded as conventional and illustration thereof is therefore omitted.

Regulation of the flame in the combustion chamber is performed in a modulated and continuous manner both during heating and during the production of any sanitary hot water. This modulated regulation is ensured by an electronic controller which is mounted on the appliance 1 and which controls operation of the boiler 6.

The gas is supplied by means of a supply pipe 21 which is preferably made of copper. Moreover, an internal hydraulic delivery pipe 28 and return pipe 29 are provided in fluid communication with the heat exchanger. A circulator 7 is provided on the return pipe. Finally, a compact expansion chamber 32 is also provided, being situated in the rear of the boiler 6.

The useful power may reach a value of several tens of Kw, for example 35 kW.

The appliance 1 has an external housing or casing with a parallelepiped shape, open at the rear, which is obtained by mounting on the frame 2 at least one pair of side panels 8 and a front panel 9.

The appliance 1 does not have a rear closing wall so as to allow access to a connector 11 for connection to the gas supply mains, which forms the external terminal of the gas supply pipe 21. Further connectors 12, 13 for connection to the hydraulic circuit of the heating plant are provided as external terminals of the internal hydraulic delivery pipe 28 and return pipe 29.

The appliance 1 is installed next to a perimetral wall 15 of a kitchen area 20, whether it be in a civil dwelling but potentially also in an industrial environment, for example an office area. The same wall 15 has, mounted therein, also the outlet terminals of the natural gas supply mains and the delivery and return supply connections of the hydraulic circuit for the heating plant. These wall connections are not shown in the drawings since they are conventional.

Advantageously, the wall 15 against which the appliance 1 is installed is a perimetral wall of the building in which the aforementioned kitchen area 20 is situated. In this way through-holes for access to an external air vent and to a boiler fumes discharge outlet may also be easily made.

Intake of the comburent air and evacuation of the combusted gas fumes may use a system with separate conduits or also a coaxial-discharge system.

The conduits and the intake/discharge holes are not shown in the drawings since they are considered to be conventional. Obviously, should the kitchen area 20 be equipped with respective tubes for connection to an external air vent and to a fumes discharge outlet, the appliance 1 would be directly connected to these tubes already provided in the perimetral wall 15.

From the above description it can be understood how the water heating appliance 1 according to the invention is provided with a single connector 11 for connection to the outlet terminal of the gas supply mains, which is mounted on the wall 15, and with associated connectors 12, 13 for connection to the delivery and return supply connections of the hydraulic circuit for the heating plant.

This single connector 11 is used both for supplying gas to the boiler 6 and for supplying gas to the cooking hob 5.

Advantageously, in fact, the cooking hob 5 may be a cooking hob with gas-fired rings 17, as shown in the attached figures.

The appliance 1 is provided inside with a gas supply pipe 21 comprising a T branch so as to be able to divide the gas supply towards the burner of the boiler 6 and towards the cooking hob 5 with gas rings 17.

This supply pipe forms an integral part of the appliance 1 and, as such, will be factory-tested and certified, thus freeing the installation companies from any certification responsibilities, except for those relating to correct installation of the appliance as a whole.

Alternatively, however, the cooking hob 5 may also be a cooking hob with electromagnetic induction hotplates. In this case, the cooking hob has only electric terminals for connection to the electric power supply mains.

In any case, whether gas rings or electromagnetic induction hotplates are present, the cooking hob 5 can be raised at an angle with respect to the frame 2 formed by the base structure of the base-mounted boiler 6. Raising of the cooking hob 5 is made possible by hinges 26 provided on a rear edge 27 of the structure 2 of the built-in appliance 1.

Moreover, the internal gas supply pipe section 21 intended to supply the rings 17 is suitably made in flexible form so as to assist raising of the cooking hob 5.

Raising of the cooking hob 5 is provided in order to allow any installation and maintenance operations both of the boiler 6 and of the said cooking hob 5. In any case, however, the cooking hob 5 must be regarded as forming part of the built-in modular structure of the appliance 1.

The aforementioned cooking hob 5 also comprises knobs 16 for operating and regulating said rings 17. These knobs 16 are arranged at the top along one edge of the appliance, for example the front edge 19.

It is quite possible, however, to arrange or position the operating knobs 16 of the cooking hob 5 in alignment along a side edge 18 or an edge situated on the right or left with respect to the front edge.

Controls 22 and indicators 23 for operation of the boiler 6 are preferably, but not exclusively, arranged on the front portion of the appliance 1 and visibly housed inside an opening 24 of the front finishing panel 9 of the built-in appliance 1.

Alternatively, the operating controls and indicators of the boiler may be arranged on top of said cooking hob and, more particularly, may be positioned on said cooking hob 5, for example near to the front edge 19.

Essentially, from the above description it is evident how the heating appliance 1 according to the invention has dimensions and volumes which are standardized to match those of a built-in modular kitchen unit.

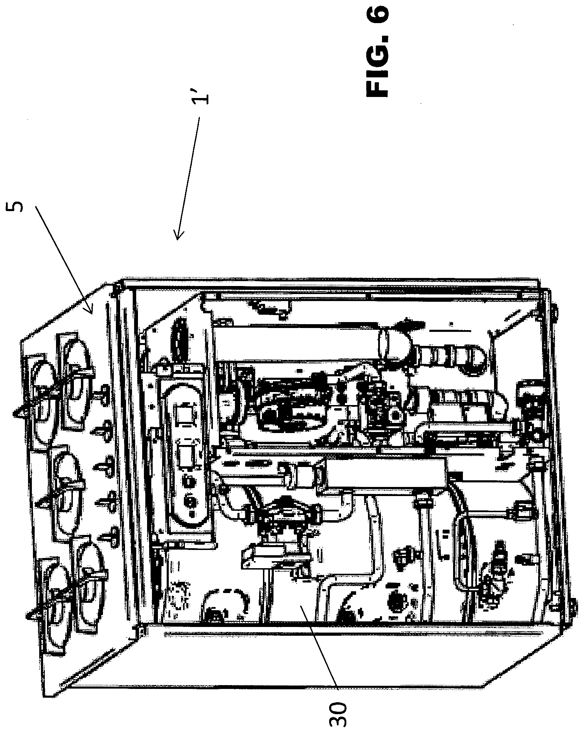

Advantageously, it is possible to provide inside the appliance a water storage tank 30 for the production of sanitary hot water, which is housed inside the built-in structure 2, as is clearly visible in Figures 5 and 6.

The tank 30 is arranged along the side of the boiler 6 and increases obviously the overall volume of the appliance 1. In Figure 5 the numeral 1' indicates the appliance realized according to the invention and incorporating also the tank 30. The tank has preferably a capacity of 60 litres.

Despite this additional component, the resulting structure is always of the built-in modular type with standardized dimensions and volumes.

If the appliance 1 described above may be made with a width of only 450 mm and a depth of 600 mm; the appliance 1', which also includes the tank 30, has a total width of 600 mm and a similar depth of 600 mm.

These measurements are those which are envisaged for the standard built-in components of modular kitchens.

The heating appliance 1 or 1' overcomes many of the difficulties in achieving easy installation in a kitchen area 20, while also offering the advantage of an integrated cooking hob in the kitchen array C.

The installation of the appliance 1 or 1' is carried out by specialized personnel and the kitchen area 20 must be provided with openings (windows) for any air renewal in the event of accidental leakage of fumes, but only for the cooking hob 5, in the case of gas rings 17, as prescribed by the existing regulations.

The boiler 6 is instead airtight since it draws in the comburent air and discharges the fumes externally.

From the above description it can be clearly understood how the appliance according to the invention achieves all the objects listed and offers numerous advantages including, not least, that of allowing the particularly economical installation of two integrated components which are more or less necessary in any home.

Moreover, since a single connection to the gas supply mains may be used, it is possible to take advantage of the already existing normal situation in the kitchen areas of most homes, where the wall-mounted gas supply outlet connection is available in the zone of the base-mounted furniture of the kitchen.

## Claims

1. Water heating appliance (1) for domestic installations, provided with a connector (11) for connection to a gas supply mains outlet and with further connectors (12, 13) for connection to delivery and return connections of a hydraulic circuit of the heating plant, wherein said water heating appliance (1) consists of a boiler (6) structured as a base-mounted built-in kitchen appliance and comprises a cooking hob (5) on top, said cooking hob (5) forming part of a built-in structure (2) of the water heating appliance (1), **characterized in that** said cooking hob (5) can be raised at an angle, being hinged with a rear edge (27) of said structure (2), in order to allow the installation and maintenance of the boiler (6).

2. Appliance according to claim 1, **characterized in that** said cooking hob (5) is a cooking hob with gas rings (17).

3. Appliance according to claim 1, **characterized in that** said cooking hob (5) is a cooking hob with electromagnetic induction hotplates.

4. Appliance according to claim 2, **characterized in that** said cooking hob comprises knobs (16) for regulating said rings (17), arranged along one edge (18, 19) of the appliance (1).

5. Appliance according to claim 1, **characterized in that** it comprises controls (22) and indicators (23) for operation of the boiler (6), arranged on a front panel (9) of said built-in appliance (1).

6. Appliance according to claim 1, **characterized in that** it comprises controls (22) and indicators for operation of the boiler (6), arranged on top of said cooking hob (5).

7. Appliance according to claim 5, **characterized in that** said controls (22) and indicators (23) for operation of the boiler are visibly arranged in an opening (24) in the front finishing panel of said built-in appliance (1).

8. Appliance according to claim 2, **characterized in that** it comprises an internal gas supply pipe (21) leading on one side to said connector (11) for connection to the gas supply mains and branched both to the boiler (6) and to the cooking hob (5).

9. Appliance according to claim 1, **characterized in that** it has dimensions and volumes which are standardized to match those of a built-in modular kitchen unit.

10. Appliance according to claim 1, **characterized in that** it comprises a water storage tank (30) for the production of sanitary hot water, housed inside said structure (2).

11. Appliance according to claim 1, **characterized in that** said boiler (6) is a gas condensation boiler.

## Patentansprüche

1. Wasserheizgerät (1) für die Hausinstallation, versehen mit einem Anschluss (11) zum Anschluss an den Anschluss eines Gasversorgungsnetzes und mit weiteren Anschlüssen (12, 13) zum Anschluss an Vor- und Rücklaufanschlüsse eines Wasserkreislaufs der Heizungsanlage, wobei das Wasserheizgerät (1) aus einem Kessel (6) besteht, der als bodenmontiertes Einbauküchengerät ausgebildet ist, und eine Kochplatte (5) oben aufweist, wobei das Kochfeld (5) Teil einer eingebauten Struktur (2) des Warmwasserbereiters (1) ist, **dadurch gekennzeichnet, dass** das Kochfeld (5) in einem Winkel angehoben werden kann und mit einer Hinterkante (27) der Struktur (2) schwenkbar verbunden ist, um die Installation und Wartung des Kessels (6) zu ermöglichen.

2. Vorrichtung nach Anspruch 1, **dadurch gekennzeichnet, dass** das Kochfeld (5) ein Kochfeld mit Gasringen (17) ist.

3. Vorrichtung nach Anspruch 1, **dadurch gekennzeichnet, dass** das Kochfeld (5) ein Kochfeld mit elektromagnetischen Induktionskochplatten ist.

4. Vorrichtung nach Anspruch 2, **dadurch gekennzeichnet, dass** das Kochfeld Knöpfe (16) zum Regulieren der Ringe (17) umfasst, die entlang einer Kante (18, 19) des Gerätes (1) angeordnet sind.

5. Vorrichtung nach Anspruch 1, **dadurch gekennzeichnet, dass** sie Steuerungen (22) und Anzeigen (23) für den Betrieb des Kessels (6) umfasst, die auf einer Frontplatte (9) der Einbauvorrichtung (1) angeordnet sind.

6. Vorrichtung nach Anspruch 1, **dadurch gekennzeichnet, dass** sie Steuerungen (22) und Anzeigen (23) für den Betrieb des Kessels (6) umfasst, die auf dem Kochfeld (5) angeordnet sind.

7. Vorrichtung nach Anspruch 5, **dadurch gekennzeichnet, dass** die Steuerungen (22) und Anzeigen (23) für den Betrieb des Kessels sichtbar in einer Öffnung (24) in der vorderen Endblende der Einbauvorrichtung (1) angeordnet sind.

8. Vorrichtung nach Anspruch 2, **dadurch gekennzeichnet, dass** sie eine interne Gaszufuhrleitung (21) umfasst, die auf einer Seite zu dem Anschluss (11) zum Anschluss an das Gasversorgungsnetz führt und sowohl mit dem Kessel (6) als auch mit dem Kochfeld (5) verbunden ist.

9. Vorrichtung nach Anspruch 1, **dadurch gekennzeichnet, dass** sie Abmessungen und Volumen aufweist, die standardisiert sind, um denen einer modularen Einbauküche zu entsprechen.

10. Vorrichtung nach Anspruch 1, **dadurch gekennzeichnet, dass** sie einen Wasserspeichertank (30) zur Erzeugung von Sanitärwarmwasser umfasst, der in der Struktur (2) untergebracht ist.

11. Vorrichtung nach Anspruch 1, **dadurch gekennzeichnet, dass** der Kessel (6) ein Gaskondensationskessel ist.

## Revendications

1. Appareil pour chauffer de l'eau (1) pour installations domestiques, lequel est muni d'un raccord (11) pour le raccordement à une prise d'alimentation principale en gaz et d'autres raccords (12, 13) pour le raccordement à des prises d'alimentation et de retour d'un circuit hydraulique de l'installation de chauffage, l'appareil pour chauffer de l'eau (1) consistant en un chauffe-eau (6) conçu comme un appareil ménager encastrable monté sur socle et comprenant une plaque de cuisson (5) sur le dessus, laquelle plaque de cuisson (5) fait partie d'une structure encastrable (2) de l'appareil pour chauffer de l'eau (1), **caractérisé en ce que** la plaque de cuisson (5) peut être relevée en faisant un angle en étant articulée sur un bord arrière (27) de la structure (2) afin de permettre l'installation et la maintenance du chauffe-eau (6).

2. Appareil selon la revendication 1, **caractérisé en ce que** la plaque de cuisson (5) est une plaque de cuisson avec des foyers annulaires de gaz (17).

3. Appareil selon la revendication 1, **caractérisé en ce que** la plaque de cuisson (5) est une plaque de cuisson avec des foyers à induction électromagnétiques.

4. Appareil selon la revendication 2, **caractérisé en ce que** la plaque de cuisson comprend des boutons (16) pour régler les foyers annulaires (17), lesquels boutons sont disposés le long d'un bord (18, 19) de l'appareil (1).

5. Appareil selon la revendication 1, **caractérisé en ce qu'il** comprend des commandes (22) et des indicateurs (23) pour le fonctionnement du chauffe-eau (6), lesquels sont disposés sur un panneau frontal (9) de l'appareil encastrable (1).

6. Appareil selon la revendication 1, **caractérisé en ce qu'il** comprend des commandes (22) et des indicateurs (23) pour le fonctionnement du chauffe-eau (6), lesquels sont disposés sur le dessus de la plaque de cuisson (5).

7. Appareil selon la revendication 5, **caractérisé en ce que** les commandes (22) et les indicateurs (23) pour le fonctionnement du chauffe-eau sont disposés de manière visible dans une ouverture (24) du panneau de finition frontal de l'appareil encastrable (1).

8. Appareil selon la revendication 2, **caractérisé en ce qu'**il comprend une conduite interne d'alimentation en gaz (21) menant d'un côté au raccord (11) pour le raccordement à l'alimentation générale en gaz et qui est raccordée la fois au chauffe-eau (6) et à la plaque de cuisson (5).

9. Appareil selon la revendication 1, **caractérisé en ce qu'**il présente des dimensions et des volumes normalisés qui correspondent à ceux d'une unité de cuisine modulaire encastrable.

10. Appareil selon la revendication 1, **caractérisé en ce qu'**il comprend un réservoir de stockage d'eau (30) pour la production d'eau chaude sanitaire, lequel est logé à l'intérieur de la structure (2).

11. Appareil selon la revendication 1, **caractérisé en ce que** le chauffe-eau (6) est un chauffe-eau à condensation à gaz.
